(19) Europäisches Patentamt
European Patent Office
Office européen des brevets

(11) EP 2 371 932 B1

(12) **EUROPEAN PATENT SPECIFICATION**

(45) Date of publication and mention of the grant of the patent:
**17.10.2018 Bulletin 2018/42**

(21) Application number: **11157506.4**

(22) Date of filing: **09.03.2011**

(51) Int Cl.:
*C08G 16/02* (2006.01) *C10M 129/16* (2006.01)
*C10M 129/95* (2006.01) *C10M 135/30* (2006.01)
*C10M 141/06* (2006.01) *C10M 141/08* (2006.01)
*C10M 145/20* (2006.01) *C10M 145/24* (2006.01)
*C10M 151/04* (2006.01) *C10M 159/12* (2006.01)
*C10M 161/00* (2006.01) *C10M 177/00* (2006.01)
*C08G 61/12* (2006.01)

(54) **A LUBRICATING OIL COMPOSITION**

SCHMIERÖLZUSAMMENSETZUNG

COMPOSITION D'HUILE LUBRIFIANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2010 EP 10158983**

(43) Date of publication of application:
**05.10.2011 Bulletin 2011/40**

(73) Proprietor: **Infineum International Limited**
**Abingdon,**
**Oxfordshire OX13 6BB (GB)**

(72) Inventors:
- **Strickland, Keith**
  **Abingdon, Oxfordshire OX13 6BB (GB)**
- **McTavish, Stuart James**
  **Abingdon, Oxfordshire OX13 6BB (GB)**

(74) Representative: **Goddard, Frances Anna et al**
**Infineum UK Limited**
**PO Box 1**
**Milton Hill**
**Abingdon,**
**Oxfordshire OX13 6BB (GB)**

(56) References cited:
**EP-A2- 1 959 003 WO-A1-2010/008532**

- **MARSCH S ET AL: "The effect of biodiesel on engine lubricants", LUBES-N-GREASES, LNG PUB. CO., INC., ARLINGTON, VA, US, [Online] vol. 13, no. 6, 1 June 2007 (2007-06-01), pages 28-34, XP002554925, ISSN: 1080-9449 Retrieved from the Internet: URL:http://digital.olivesoftware.com/Olive /ODE/LNG/> [retrieved on 2009-11-11]**

EP 2 371 932 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## FIELD OF THE INVENTION

The present invention relates to automotive lubricating oil compositions, more especially to automotive lubricating oil compositions for use in gasoline (spark-ignited) and diesel (compression-ignited) internal combustion engines fuelled at least in part with a biofuel, especially compression-ignited internal combustion engines fuelled at least in part with a biodiesel fuel and spark-ignited internal combustion engines fuelled at least in part with bioethanol fuel, crankcase lubrication, such compositions being referred to as crankcase lubricants.

In particular, although not exclusively, the present invention relates to automotive lubricating oil compositions, preferably having low levels of phosphorus and also low levels of sulfur and/or sulfated ash, which exhibit improved anti-oxidant properties during operation of the engine which is fuelled with a biofuel; and to the use of additives in such compositions for improving the anti-oxidant properties of the lubricating oil composition.

## BACKGROUND OF THE INVENTION

A crankcase lubricant is an oil used for general lubrication in an internal combustion engine where an oil sump is situated generally below the crankshaft of the engine and to which circulated oil returns. The contamination or dilution of the crankcase lubricant in internal combustion engines, especially engines fuelled at least in part with a biofuel, is a concern.

Biodiesel fuels include components of low volatility which are slow to vaporize after injection of the fuel into the engine. Typically, an unburnt portion of the biodiesel and some of the resulting partially combusted decomposition products become mixed with the lubricant on the cylinder wall and are washed down into the oil sump, thereby contaminating the crankcase lubricant. The biodiesel fuel in the contaminated lubricant may form further decompositions products, due to the extreme conditions during lubrication of the engine. It has been found that the presence of biodiesel fuel and the decomposition products thereof in the crankcase lubricant promotes the oxidation of the lubricant. Moreover, it has been found that this problem is significantly worse in diesel engines which employ a late post-injection of fuel into the cylinder (e.g. light duty, medium duty and passenger car diesel engines) to regenerate an exhaust gas after-treatment device.

Exhaust gas after-treatment devices, such as a diesel particulate filter (DPF), require periodical regeneration to remove the build up of soot and to prevent them from having a detrimental effect on engine performance. One way to create conditions for initiating and sustaining regeneration of a DPF involves elevating the temperature of the exhaust gases entering the DPF to burn the soot. As a diesel engine runs relatively cool and lean, this may be achieved by adding fuel into the exhaust gases optionally in combination with the use of an oxidation catalyst located upstream of the DPF. Heavy duty diesel (HDD) engines, such as those in trucks, typically employ a late post-injection of fuel directly into the exhaust system outside of the cylinder, whilst light duty and medium duty diesel engines typically employ a late post-injection of fuel directly into the cylinder during an expansion stroke. Surprisingly, it has been found that the oxidation of the lubricant increases significantly in a diesel engine fuelled at least in part with biodiesel when the engine employs a late post-injection of fuel directly into the cylinder. Although only theory, it is believed this increased oxidation of the lubricant is due to more biodiesel being absorbed by the lubricant on the more exposed cylinder wall, thereby increasing contamination of the lubricant in the sump.

A similar increase in the oxidation of the lubricant has also been found to occur in spark-ignited internal combustion engines fuelled at least in part with an alcohol based fuel (e.g. bioethanol) due to the presence of the alcohol based fuel and the decomposition products thereof in the crankcase lubricant.

Oxidation of the lubricant typically yields corrosive acids and an undesirable increase in viscosity, thereby shortening the useful life of the lubricant. Accordingly, lubricants with improved antioxidant properties need to be identified.

EP 1,959,003A discloses linked aromatic compounds which act as soot dispersants in lubricating oil compositions when used to lubricate an engine fuelled with petroleum gasoline or petroleum diesel.

## SUMMARY OF THE INVENTION

The present invention is based on the discovery that a lubricating oil composition can be formulated which exhibits significantly improved antioxidant properties in the presence of a biofuel.

In accordance with a first aspect, the present invention provides a lubricating oil composition comprising:

(A) an oil of lubricating viscosity in a major amount in excess of 50 mass % of the lubricating oil composition;
(B) an oil-soluble or oil-dispersible additive component (B) as an additive in a minor amount of 0.1 to 15 mass % of the lubricating oil composition, based on the total mass of the lubricating oil composition, wherein additive component

(B) is obtainable by the reaction of a polybutenyl succinic acylating agent derived from a polyalkene having a number average molecular weight (Mn) of from 100 to 5000, with a compound of general Formula I: wherein:

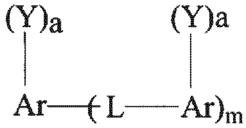

(I)

each Ar independently represents unsubstituted, except for groups Y and terminal groups, naphthalene;
each L independently represents a $C_1$ to $C_6$ alkylene linking group;
each Y independently represents $-OR^1$ or a moiety of the formula $H(O(CR^2R^3)_n)_yO-$, wherein: each $R^1$ independently represents a $C_1$ to $C_{10}$ alkyl group; each $R^2$ and $R^3$ independently represents H, or $C_1$ to $C_6$ alkyl group; n is 2 to 10; and y is 1 to 30;
each a is independently 0 to 3, with the proviso that at least one Ar moiety bears at least one group Y of the formula $H(O(CR^2R^3)_n)_yO-$; and,
m is 1 to 100; and,
wherein the lubricating oil composition is contaminated with at least 0.3 mass %, based on the total mass of the lubricating oil composition, of biodiesel fuel which is at least one alkyl ester of a $C_{10}$ to $C_{30}$ long chain fatty acid derived from vegetable oils or animal fats.

Preferably, the lubricating oil composition according to the present invention is a crankcase lubricant.

It has unexpectedly been found that the inclusion of the oil-soluble additive component (B), as defined herein, in a lubricating oil composition, particularly one including a Group III base stock, improves the antioxidant properties of the lubricant, in use, in the lubrication of an internal combustion engine which is fuelled at least in part with a biofuel. In particular, the inclusion of such an oil-soluble additive component (B) in a lubricating oil composition provides, in use, a positive credit in terms of reduced oxidation of the lubricant and/or may promote the useful life of the lubricant.

According to a second aspect, the present invention provides a method of lubricating a compression-ignited internal combustion engine which is fuelled with biodiesel fuel, as defined in accordance with the first aspect of the invention, comprising operating the engine with a lubricating oil composition comprising: (A) an oil of lubricating viscosity in a major amount in excess of 50 mass % of the lubricating oil composition; and, an oil-soluble or oil-dispersible additive component (B), as defined in the first aspect of the invention, as an additive component in a minor amount of 0.1 to 15 mass % of the lubricating oil composition, based on the total mass of the lubricating oil composition.

According to a third aspect, the present invention provides the use, in the lubrication of a compression-ignited internal combustion engine which is fuelled with biodiesel fuel, as defined in the first aspect of the invention, of an oil-soluble or oil-dispersible additive component (B), as defined in the first aspect of the invention, in a minor amount of 0.1 to 15 mass % of the lubricating oil composition, based on the total mass of the lubricating oil composition, in a lubricating oil composition comprising an oil of lubricating viscosity in a major amount in excess of 50 mass % of the lubricating oil composition, to reduce and/or inhibit oxidation of the lubricating oil composition, during operation of the engine, wherein the lubricating oil composition becomes contaminated with the biodiesel fuel during operation of the engine.

Suitably, there is provided a method of reducing and/or inhibiting the oxidation of a lubricating oil composition in the lubrication of a compression-ignited internal combustion engine which is fuelled at least in part with a biofuel, the method comprising lubricating the engine with a lubricating oil composition comprising: (A) an oil of lubricating viscosity in a major amount; and, (B) an oil-soluble or oil-dispersible additive component (B), as defined in accordance with the first aspect of the present invention, as an additive component in a minor amount.

Suitably, there is provided the use, in the lubrication of a compression-ignited internal combustion engine which is fuelled at least in part with a biofuel, of a lubricating oil composition comprising: (A) an oil of lubricating viscosity in a major amount; and, (B) an oil-soluble or oil-dispersible additive component (B), as defined in accordance with the first aspect of the present invention, as an additive component in a minor amount, to reduce and/or inhibit oxidation of the lubricating oil composition, during operation of the engine.

Suitably, there is provided a compression-ignited internal combustion engine comprising a crankcase containing a lubricating oil composition comprising: (A) an oil of lubricating viscosity in a major amount; and, (B) an oil-soluble or oil-dispersible additive component (B), as defined in accordance with the first aspect of the present invention, as an additive component in a minor amount, wherein the engine is fuelled at least in part with a biofuel.

Suitably, the lubricating oil composition comprises:

(A) an oil of lubricating viscosity in a major amount;
(B) an oil-soluble or oil-dispersible additive component (B), as an additive in a minor amount, and represented by

the general Formula II:

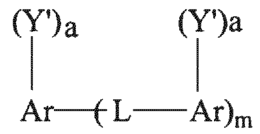 (II)

wherein:

each Y' independently represents $-OR^1$ or a moiety of the formula $Z(O(CR^2R^3)_n)_yO$-; each Z independently represents H, an acyl group, a polyacyl group, a lactone ester group, an acid ester group, and Ar, L, $R^1$, $R^2$, $R^3$, m, n, y and a are the same as defined for a compound of general Formula (I), with the proviso that, at least one Ar moiety bears at least one substituent group Y' of the formula $Z(O(CR^2R^3)_n)_yO$- in which Z is not H; and, wherein the lubricating oil composition is contaminated with at least 0.3 mass %, based on the total mass of the lubricating oil composition, of biodiesel fuel which is at least one alkyl ester of a $C_{10}$ to $C_{30}$ long chain fatty acid derived from vegetable oils or animal fats.

Preferably, the lubricating oil compositions as defined in the second and third aspects of the invention are each independently contaminated with at least 0.3 mass %, based on the total mass of the lubricating oil composition, of a biofuel.

Preferably, the lubricating composition according to the first aspect of the present invention and as defined in the second and third aspects of the present invention each independently comprise an oil of lubricating viscosity in a major amount comprising a Group III base stock.

Preferably, the compression-ignited internal combustion engine is fuelled at least in part with a biodiesel fuel.

Preferably, the engine as defined in the second and third aspects of the present invention comprises a compression-ignited internal combustion engine.

Biofuel of each aspect of the invention is biodiesel.

In this specification, the following words and expressions, if and when used, have the meanings given below:

"active ingredients" or "(a.i.)" refers to additive material that is not diluent or solvent;

"alcohol based fuel" refers to a fuel including an alcohol, irrespective of the source of alcohol, such as methanol, ethanol, propanol and butanol, especially ethanol. The term "alcohol based fuel" embraces pure alcohol based fuel (i.e. pure ethanol) and also alcohol based fuel blends comprising, for example, a mixture of an alcohol and petroleum gasoline;

"ethanol based fuel" refers to a fuel including ethanol and is otherwise defined in the same way as "alcohol based fuel";

"biofuel" refers to a biodiesel fuel.

More preferably, the term "biofuel" means a fuel derived at least in part from a renewable biological resource e.g. biodiesel fuel. The biofuel is biodiesel

"biofuel decomposition products" are known to be produced by a radical autooxidation reaction mechanism and include ketones, carboxylic acids, aldehydes and esters;

"biodiesel fuel" refers to a fuel derived at least in part from a renewable biological resource (e.g. derivable from a natural oil/fat, such as vegetable oils or animal fats) comprising at least one alkyl ester, typically a mono-alkyl ester, of a long chain fatty acid. The term "biodiesel fuel" embraces pure biodiesel fuel (i.e. B100 as defined by ASTM D6751-08 (USA) and EN 14214 (Europe)) and also biodiesel fuel blends comprising a mixture of biodiesel fuel and another fuel, such as petroleum diesel fuel;

"bioalcohol fuel" refers to fuel including an alcohol derived from a renewable biological resource (e.g. fermented sugar) and is otherwise defined in the same way as "alcohol based fuel";

"bioethanol fuel" refers to fuel including ethanol derived from a renewable biological resource and is otherwise defined in the same way as "ethanol based fuel". The term "bioethanol fuel" embraces pure bioethanol fuel (i.e. pure

bioethanol E100) and also bioethanol fuel blends comprising, for example, a mixture of an bioethanol and petroleum gasoline;

"petroleum gasoline" refers to a gasoline fuel produced from petroleum;

"petroleum diesel fuel" refers to a diesel fuel produced from petroleum;

"bioethanol" refers to ethanol derived from a renewable biological resource;

"comprising" or any cognate word specifies the presence of stated features, steps, or integers or components, but does not preclude the presence or addition of one or more other features, steps, integers, components or groups thereof. The expressions "consists of" or "consists essentially of" or cognates may be embraced within "comprises" or cognates, wherein "consists essentially of" permits inclusion of substances not materially affecting the characteristics of the composition to which it applies;

"hydrocarbyl" means a chemical group (i.e. substituent) of a compound that contains hydrogen and carbon atoms and that is bonded to the remainder of the compound directly via a carbon atom. The group may contain one or more atoms other than carbon and hydrogen provided they do not affect the essentially hydrocarbyl nature of the group. Such substituents include the following:

1. Hydrocarbon substituents, that is, aliphatic (for example alkyl or alkenyl), alicyclic (for example cycloalkyl or cycloalkenyl) substituents, aromatic-, aliphatic- and alicyclic-substituted aromatic nuclei and the like, as well as cyclic substituents wherein the ring is completed through another portion of the ligand (that is, any two indicated substituents may together form an alicyclic group);

2. Substituted hydrocarbon substituents, that is, those containing non-hydrocarbon groups which, in the context of this invention, do not alter the predominantly hydrocarbyl character of the substituent. Those skilled in the art will be aware of suitable groups (e.g., halo, especially chloro and fluoro, amino, alkoxyl, mercapto, alkylmercapto, nitro, nitroso, sulfoxy, etc.).

"halo" or "halogen" includes fluoro, chloro, bromo and iodo;

"polycyclic carbocyclic aromatic moiety" means an aromatic moiety *per se* which includes two or more aromatic fused rings, wherein each aromatic ring comprises only carbon atoms and the two or more rings are fused together by sharing adjacent carbon atoms;

"polycyclic heterocyclic aromatic moiety" means a polycyclic carbocyclic aromatic moiety as defined herein which includes at least one hetero atom in the one or more aromatic rings;

"oil-soluble" or "oil-dispersible", or cognate terms, used herein do not necessarily indicate that the compounds or additives are soluble, dissolvable, miscible, or are capable of being suspended in the oil in all proportions. These do mean, however, that they are, for example, soluble or stably dispersible in oil to an extent sufficient to exert their intended effect in the environment in which the oil is employed. Moreover, the additional incorporation of other additives may also permit incorporation of higher levels of a particular additive, if desired;

"major amount" means in excess of 50 mass % of a composition;

"minor amount" means less than 50 mass % of a composition, expressed in respect of the stated additive and in respect of the total mass of all the additives present in the composition, reckoned as active ingredient of the additive or additives;

"ppm" means parts per million by mass, based on the total mass of the lubricating oil composition;

"KV100" means kinematic viscosity at 100°C as measured by ASTM D445;

"TBN" means total base number as measured by ASTM D2896;

"phosphorus content" is measured by ASTM D5185;

"sulfur content" is measured by ASTM D2622; and,

"sulfated ash content" is measured by ASTM D874.

All percentages reported are mass % on an active ingredient basis, i.e., without regard to carrier or diluent oil, unless otherwise stated.

Also, it will be understood that various components used, essential as well as optimal and customary, may react under conditions of formulation, storage or use and that the invention also provides the product obtainable or obtained as a result of any such reaction.

Further, it is understood that any upper and lower quantity, range and ratio limits set forth herein may be independently combined.

## DETAILED DESCRIPTION OF THE INVENTION

The features of the invention relating, where appropriate, to each and all aspects of the invention, will now be described in more detail as follows:

### OIL OF LUBRICATING VISCOSITY (A)

The oil of lubricating viscosity (sometimes referred to as "base stock" or "base oil") is the primary liquid constituent of a lubricant, into which additives and possibly other oils are blended, for example to produce a final lubricant (or lubricant composition). A base oil is useful for making concentrates as well as for making lubricating oil compositions therefrom, and may be selected from natural (vegetable, animal or mineral) and synthetic lubricating oils and mixtures thereof.

The base stock groups are defined in the American Petroleum Institute (API) publication "Engine Oil Licensing and Certification System", Industry Services Department, Fourteenth Edition, December 1996, Addendum 1, December 1998. Typically, the base stock will have a viscosity preferably of 3-12, more preferably 4-10, most preferably 4.5-8, $mm^2/s$ (cSt) at 100°C.

Definitions for the base stocks and base oils in this invention are the same as those found in the American Petroleum Institute (API) publication "Engine Oil Licensing and Certification System", Industry Services Department, Fourteenth Edition, December 1996, Addendum 1, December 1998. Said publication categorizes base stocks as follows:

a) Group I base stocks contain less than 90 percent saturates and/or greater than 0.03 percent sulphur and have a viscosity index greater than or equal to 80 and less than 120 using the test methods specified in Table E-1.

b) Group II base stocks contain greater than or equal to 90 percent saturates and less than or equal to 0.03 percent sulphur and have a viscosity index greater than or equal to 80 and less than 120 using the test methods specified in Table E-1.

c) Group III base stocks contain greater than or equal to 90 percent saturates and less than or equal to 0.03 percent sulphur and have a viscosity index greater than or equal to 120 using the test methods specified in Table E-1.

d) Group IV base stocks are polyalphaolefins (PAO).

e) Group V base stocks include all other base stocks not included in Group I, II, III, or IV.

Table E-1: Analytical Methods for Base Stock

| Property | Test Method |
|---|---|
| Saturates | ASTM D 2007 |
| Viscosity Index | ASTM D 2270 |
| Sulphur | ASTM D 2622 |
| | ASTM D 4294 |
| | ASTM D 4927 |
| | ASTM D 3120 |

In accordance with a preferred aspect of the present invention, the oil of lubricating viscosity comprises a Group III base stock. Preferably, the oil of lubricating viscosity comprises greater than or equal to 10 mass %, more preferably greater than or equal to 20 mass %, even more preferably greater than or equal to 25 mass %, even more preferably greater than or equal to 30 mass %, even more preferably greater than or equal to 40 mass %, even more preferably

greater than or equal to 45 mass % of a Group III base stock, based on the total mass of the oil of lubricating viscosity. Even more preferably, the oil of lubricating viscosity comprises greater than 50 mass %, preferably greater than or equal to 60 mass %, more preferably greater than or equal to 70 mass %, even more preferably greater than or equal to 80 mass %, even more preferably greater than or equal to 90 mass % of a Group III base stock, based on the total mass of the oil of lubricating viscosity. Most preferably, the oil of lubricating viscosity consists essentially of a Group III base stock. In some embodiments the oil of lubricating viscosity consists solely of Group III base stock. In the latter case it is acknowledged that additives included in the lubricating oil composition may comprise a carrier oil which is not a Group III base stock.

Other oils of lubricating viscosity which may be included in the lubricating oil composition are detailed as follows: Natural oils include animal and vegetable oils (e.g. castor and lard oil), liquid petroleum oils and hydrorefined, solvent-treated mineral lubricating oils of the paraffinic, naphthenic and mixed paraffinic-naphthenic types. Oils of lubricating viscosity derived from coal or shale are also useful base oils.

Synthetic lubricating oils include hydrocarbon oils such as polymerized and interpolymerized olefins (e.g. polybutylenes, polypropylenes, propylene-isobutylene copolymers, chlorinated polybutylenes, poly(1-hexenes), poly(1-octenes), poly(1-decenes)); alkylbenzenes (e.g. dodecylbenzenes, tetradecylbenzenes, dinonylbenzenes, di(2-ethylhexyl)benzenes); polyphenols (e.g. biphenyls, terphenyls, alkylated polyphenols); and alkylated diphenyl ethers and alkylated diphenyl sulfides and the derivatives, analogues and homologues thereof.

Another suitable class of synthetic lubricating oils comprises the esters of dicarboxylic acids (e.g. phthalic acid, succinic acid, alkyl succinic acids and alkenyl succinic acids, maleic acid, azelaic acid, suberic acid, sebasic acid, fumaric acid, adipic acid, linoleic acid dimer, malonic acid, alkylmalonic acids, alkenyl malonic acids) with a variety of alcohols (e.g. butyl alcohol, hexyl alcohol, dodecyl alcohol, 2-ethylhexyl alcohol, ethylene glycol, diethylene glycol monoether, propylene glycol). Specific examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, and the complex ester formed by reacting one mole of sebacic acid with two moles of tetraethylene glycol and two moles of 2-ethylhexanoic acid.

Esters useful as synthetic oils also include those made from $C_5$ to $C_{12}$ monocarboxylic acids and polyols, and polyol ethers such as neopentyl glycol, trimethylolpropane, pentaerythritol, dipentaerythritol and tripentaerythritol.

Unrefined, refined and re-refined oils can be used in the compositions of the present invention. Unrefined oils are those obtained directly from a natural or synthetic source without further purification treatment. For example, a shale oil obtained directly from retorting operations, a petroleum oil obtained directly from distillation or ester oil obtained directly from an esterification process and used without further treatment would be unrefined oil. Refined oils are similar to the unrefined oils except they have been further treated in one or more purification steps to improve one or more properties. Many such purification techniques, such as distillation, solvent extraction, acid or base extraction, filtration and percolation are known to those skilled in the art. Re-refined oils are obtained by processes similar to those used to obtain refined oils applied to refined oils which have been already used in service. Such re-refined oils are also known as reclaimed or reprocessed oils and often are additionally processed by techniques for approval of spent additive and oil breakdown products.

Other examples of base oil are gas-to-liquid ("GTL") base oils, i.e. the base oil may be an oil derived from Fischer-Tropsch synthesised hydrocarbons made from synthesis gas containing $H_2$ and CO using a Fischer-Tropsch catalyst. These hydrocarbons typically require further processing in order to be useful as a base oil. For example, they may, by methods known in the art, be hydroisomerized; hydrocracked and hydroisomerized; dewaxed; or hydroisomerized and dewaxed.

The oil of lubricating viscosity may also comprise a Group I, Group II, Group IV or Group V base stocks or base oil blends of the aforementioned base stocks.

Preferably, the volatility of the oil of lubricating viscosity or oil blend, as measured by the NOACK test (ASTM D5880), is less than or equal to 16%, preferably less than or equal to 13.5%, preferably less than or equal to 12%, more preferably less than or equal to 10%, most preferably less than or equal to 8%. Preferably, the viscosity index (VI) of the oil of lubricating viscosity is at least 95, preferably at least 110, more preferably at least 120, even more preferably at least 125, most preferably from about 130 to 140.

The oil of lubricating viscosity is provided in a major amount, in combination with a minor amount of additive component (B), as defined herein and, if necessary, one or more co-additives, such as described hereinafter, constituting a lubricating oil composition. This preparation may be accomplished by adding the additives directly to the oil or by adding them in the form of a concentrate thereof to disperse or dissolve the additive. Additives may be added to the oil by any method known to those skilled in the art, either before, at the same time as, or after addition of other additives.

Preferably, the oil of lubricating viscosity is present in an amount of greater than 55 mass %, more preferably greater than 60 mass %, even more preferably greater than 65 mass %, based on the total mass of the lubricating oil composition. Preferably, the oil of lubricating viscosity is present in an amount of less than 98 mass %, more preferably less than 95 mass %, even more preferably less than 90 mass %, based on the total mass of the lubricating oil composition.

The lubricating oil compositions of the invention comprise defined components that may or may not remain the same chemically before and after mixing with an oleaginous carrier. This invention encompasses compositions which comprise the defined components before mixing, or after mixing, or both before and after mixing.

When concentrates are used to make the lubricating oil compositions, they may for example be diluted with 3 to 100, e.g. 5 to 40, parts by mass of oil of lubricating viscosity per part by mass of the concentrate.

Preferably, the lubricating oil composition of the present invention contains low levels of phosphorus, namely up to 0.12 mass %, preferably up to 0.11 mass %, more preferably not greater than 0.10 mass %, even more preferably up to 0.09 mass %, even more preferably up to 0.08 mass %, even more preferably up to 0.06 mass % of phosphorus, expressed as atoms of phosphorus, based on the total mass of the composition.

Typically, the lubricating oil composition may contain low levels of sulfur. Preferably, the lubricating oil composition contains up to 0.4, more preferably up to 0.3, most preferably up to 0.2, mass % sulfur, expressed as atoms of sulfur, based on the total mass of the composition.

Typically, the lubricating oil composition may contain low levels of sulphated ash. Preferably, the lubricating oil composition contains up to and including 1.2, more preferably up to 1.1, even more preferably up to 1.0, even more preferably up to 0.8, mass % sulphated ash, based on the total mass of the composition.

Suitably, the lubricating oil composition may have a total base number (TBN) of 4 to 15, preferably 5 to 12. In heavy duty diesel (HDD) engine applications the TBN of the lubricating composition ranges from about 4 to 12, such as 6 to 12. In a passenger car diesel engine lubricating oil composition (PCDO) and a passenger car motor oil for a spark-ignited engine (PCMO), the TBN of the lubricating composition ranges from about 5.0 to about 12.0, such as from about 5.0 to about 11.0.

Preferably, the lubricating oil composition is a multigrade identified by the viscometric descriptor SAE 20WX, SAE 15WX, SAE 10WX, SAE 5WX or SAE 0WX, where X represents any one of 20, 30, 40 and 50; the characteristics of the different viscometric grades can be found in the SAE J300 classification. In an embodiment of each aspect of the invention, independently of the other embodiments, the lubricating oil composition is in the form of an SAE 10WX, SAE 5WX or SAE 0WX, preferably in the form of an SAE 5WX or SAE 0WX, wherein X represents any one of 20, 30, 40 and 50. Preferably X is 20 or 30.

**OIL-SOLUBLE ADDITIVE COMPONENT (B)**

The oil-soluble or oil-dispersible additive component (B) is obtainable by the reaction of a polybutenyl succinic acylating agent derived from a polyalkene having a number average molecular weight (Mn) of from 100 to 5000 with a compound of general Formula I:

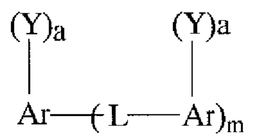

(I)

wherein:

each Ar independently represents unsubstituted, except for groups Y and terminal groups, naphthalene;each L independently represents a $C_1$ to $C_6$ alkylene linking group; each Y independently represents $-OR^1$ or a moiety of the formula $H(O(CR^2R^3)n)yO-$, wherein: each $R^1$ independently represents a $C_1$ to $C_{10}$ alkyl group; each $R^2$ and $R^3$ independently represents H, or $C_1$ to $C_6$ alkyl group; n is 2 to 10; and y is 1 to 30; each a is independently 0 to 3, with the proviso that at least one Ar moiety bears at least one group Y of the formula $H(O(CR^2R^3)n)yO-$; and, m is 1 to 100

The oil-soluble additive component (B) is known to function as a soot dispersant in a lubricating oil composition, in use, in the lubrication of a compression ignited and spark ignited internal combustion engine which is fuelled with a petroleum fuel i.e. petroleum diesel fuel or gasoline. The oil-soluble additive component (B) and the compound of Formula I may be synthesised by standard chemical procedures, such as those disclosed in U.S. published patent applications 2006/0189492A and 2008/194438A.

Ar is naphthalene. According to a preferred embodiment of the present invention, each Ar in a compound of Formula I is identical. Each Ar in a compound of Formula I represents naphthalene.

Each Ar in a compound of Formula I is unsubstituted, except for group(s) Y and terminal groups.

Each linking moiety (L) may be the same or different.

Preferably, each linking moiety (L) independently represents a linking group as defined herein. The linking groups is a $C_1$ to $C_6$ alkylene linkages, Preferred linking groups are alkylene linkages such as $-CH_3CHC(CH_3)_2-$, or $C(CH_3)_2-$. More preferred linking groups are alkylene linkages, most preferably $-CH_2-$. Most preferably, each linking group (L) represents the same linking group, especially $-CH_2-$.

Each Y in a compound of formula I independently represents $-OR^1$ or a moiety of the formula $H(O(CR^2R^3)n)yO-$, wherein: each R1 independently represents a $C_1$ to $C_{10}$ alkyl group; each $R^2$ and $R^3$ independently represents H, or $C_1$ to $C_6$ alkyl group; n is 2 to 10; and y is 1 to 30; each a is independently 0 to 3, with the proviso that at least one Ar moiety bears at least one group Y of the formula $H(O(CR^2R^3)n)yO-$ to permit reaction with the at least one acylating agent; and, m is 1 to 100.

Each $R^1$ of the moiety $-OR^1$, which each Y may independently represent, independently represents a $C_1$ to $C_{10}$ alkyl group, particularly a $C_1$ to $C_4$ alkyl group (i.e. methyl, ethyl, propyl or butyl), especially a methyl group.

Each $R^1$ of the moiety $-OR^1$, which each Y may independently represent, may be the same or different. More preferably, each $R^1$ of the moiety $-OR^1$, which each Y may independently represent, is identical. Most preferably, each $R^1$ of the moiety $-OR^1$, which each Y may independently represent, represents a methyl group.

Preferably, each $R^2$, $R^3$ independently represents H or a $C_1$ to $C_6$ alkyl group (i.e. methyl, ethyl, propyl, butyl, pentyl or hexyl), especially hydrogen. Each $R^2$, $R^3$ may be the same or different. Preferably, each $R^2$ and $R^3$ is identical, more preferably each $R^2$ and $R^3$ represents hydrogen.

Each represents oxygen.

Preferably, each y in the moiety of formula $H(O(CR^2R^3)_n)_yX-$ independently represents 1 to 6, especially 1. More preferably, each y in the moiety of formula $H(O(CR^2R^3)_n)_yX-$ is identical.

Preferably, each n in the moiety of formula $H(O(CR^2R^3)_n)_yX-$ independently represents 2 to 6, when X represents O, more preferably each n represents 2.

Most preferably, each n in the moiety of formula $H(O(CR^2R^3)_n)_yX-$ is identical when X represents O.

Preferably, each a in a compound of Formula I independently represents 1 to 3, especially 1. More preferably, each a in a compound of Formula I is identical. Most preferably, each a in a compound of Formula I represents 1.

Preferably, m in a compound of Formula I is 2 to 25.

Highly preferred compounds of Formula I include those wherein each Y is independently a moiety of formula $H(O(CR^2R^3)_n)_yX-$, where $R^2$, $R^3$, n, y and X are as defined herein, more preferably $H(O(CR^2R^3)_2)_yO-$ where y is 1 to 6, most preferably each Y is $HOCH_2CH_2O-$. Preferably, each Y is identical. Suitably, such preferred compounds of Formula I may be derived from 2-(2-naphthoxy)-ethanol when Ar represents naphthalene.

Alternative, highly preferred compounds of Formula I include those wherein at least one Ar moiety bears at least one group Y of the formula $-OR^1$, as defined herein, and at least one Ar moiety bears at least one group Y of the formula $H(O(CR^2R^3)_n)_yX-$, where $R^2$, $R^3$, n, y and X are as defined herein. Preferably, 2 mol. % to about 98 mol. %, preferably from about 40 mol. % to about 60 mol. % such as from about 65 mol. % to about 75 mol. %, of the Y units each independently represent $H(O(CR^2R^3)_n)_yX-$, where $R^2$, $R^3$, n, y and X are as defined herein, more preferably $H(O(CR^2R^3)_2)_yO-$ where y is 1 to 6, most preferably $HOCH_2CH_2O-$; and, from about 98 mol. % to 2 mol. %, preferably from about 60 mol. % to 40 mol. %, such as from about 35 mol. % to about 25 mol. %, of Y units each independently represent $-OR^1$, as defined herein, more preferably $-OCH_3$. Preferably, each Y unit representing $H(O(CR^2R^3)_n)_yX-$ is identical. Preferably, each Y unit representing $-OR^1$ is identical. Suitably, such preferred compounds of Formula (I) may be derived from about 65 mol. % to about 75 mol. % of 2-(2-naphthoxy)-ethanol and from about 35 mol. % to about 25 mol. % of 2-methoxy naphthalene, when Ar represents naphthalene.

Methods for forming compounds of Formula I should be apparent to those skilled in the art. A hydroxyl aromatic compound, such as naphthol can be reacted with an alkylene carbonate (e.g., ethylene carbonate) to provide a compound of the formula $AR-(Y)_a$. Preferably, the hydroxyl aromatic compound and alkylene carbonate are reacted in the presence of a base catalyst, such as aqueous sodium hydroxide, and at a temperature of from about 25 to about 300°C, preferably at a temperature of from about 50 to about 200°C. During the reaction, water may be removed from the reaction mixture by azeotropic distillation or other conventional means. If separation of the resulting intermediate product is desired, upon completion of the reaction (indicated by the cessation of $CO_2$ evolution), the reaction product can be collected, and cooled to solidify. Alternatively, a hydroxyl aromatic compound, such as naphthol, can be reacted with an epoxide, such as ethylene oxide, propylene oxide, butylenes oxide or styrene oxide, under similar conditions to incorporate one or more oxy-alkylene groups.

To form a compound of Formula I, the resulting intermediate compound $Ar-(Y)_a$ may be further reacted with a polyhalogenated (preferably dihalogenated) hydrocarbon (e.g., 1-4-dichlorobutane, 2,2-dichloropropane, etc.), or a di- or poly-olefin (e.g., butadiene, isoprene, divinylbenzene, 1,4-hexadiene, 1,5-hexadiene, etc.) to yield a compound of Formula I having an alkylene linking groups. Reaction of moieties $Ar-(Y)_a$ and a ketone or aldehyde (e.g., formaldehyde, acetone, benzophenone, acetophenone, etc.) provides an alkylene linked compound. An acyl-linked compound can be formed by reacting moieties $Ar-(Y)_a$ with a diacid or anhydride (e.g., oxalic acid, malonic acid, succinic acid, glutaric acid, adipic acid, succinic anhydride, etc.).

To form the preferred compounds of Formula (I), having an alkylene linking group, more preferably a methylene linking group, base remaining in the $Ar-(Y)_a$ reaction mixture can be neutralized with acid, preferably with an excess of acid (e.g., a sulfonic acid) and reacted with an aldehyde, preferably formaldehyde, and preferably in the presence of residual acid, to provide an alkylene, preferably methylene bridged compound of Formula (I). The degree of polymerization

of the compounds of Formula I range from 2 to about 101 (corresponding to a value of m of from 1 to about 100), preferably from about 2 to about 50, most preferably from about 2 to about 25.

To provide the highly preferred compounds of Formula (I), naphthyloxyethanol alone or a mixture of naphthyloxyethanol and 2-methoxylnaphthalene can be reacted with formaldehyde in the presence of an acid catalyst, preferably selected from oil soluble sulfonic acid and solid acid catalyst. Preferably, the naphthoxyethanol is the product of a reaction of a hydroxyl-naphthylene compound in the presence of a base catalyst. Preferably, remaining base is neutralized with an excess of acid prior to the introduction of the formaldehyde.

The oil-soluble additive component (B) formed by reacting a compound of Formula I with at least one of an acylating agent, an alkylating agent and an arylating agent, and may be represented by the general Formula II:

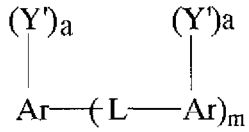

(II)

wherein:

each Y' independently represents -$OR^1$ or a moiety of the formula $Z(O(CR^2R^3)_n)_yX$-; each Z independently represents H, an acyl group, a polyacyl group, a lactone ester group, an acid ester group, and Ar, L, X, $R^1$, $R^2$, $R^3$, n, y and a, and $R^4$, $R^5$, and z when present, are the same as defined for a compound of general Formula (I), with the proviso that, at least one Ar moiety bears at least one substituent group Y' of the formula $Z(O(CR^2R^3)_n)_yX$- in which Z is not H; and m is 1 to 100.

The acylating agent is a polybutenyl succinic acylating agents such as polybutenyl, or polyisobutenyl succinic anhydride (PIBSA). The polybutenyl succinic acylating agent will be derived from a polybutylene having a number average molecular weight ($\overline{M}_n$) of from 100 to 5000, preferably from about 200 to about 3000, more preferably from about 450 to about 2500.

Acylating agents can be prepared by conventional methods known to those skilled in the art, such as chlorine-assisted, thermal and radical grafting methods. The acylating agents can be mono- or polyfunctional. Preferably, the acylating agents have a functionality of less than 1.3, where functionality (F) is determined according to the following formula:

$$F = (SAP \times \overline{M}_n)/((112{,}200 \times A.I.) - (SAP \times MW))$$

wherein SAP is the saponification number (i.e., the number of milligrams of KOH consumed in the complete neutralization of the acid groups in one gram of the acyl group-containing reaction product, as determined according to ASTM D94); $\overline{M}_n$ is the number average molecular weight of the starting polyalkene; A.I. is the percent active ingredient of the acyl group-containing reaction product (the remainder being unreacted polyalkene, acylating agent and diluent); and MW is the molecular weight of the acyl group (e.g., 98 for succinic anhydride).

Molar amounts of the compound of Formula (I) and the acylating agent can be adjusted such that all, or only a portion, such as 25% or more, 50% or more or 75% or more of groups Y are converted to groups Y'. In the case where the compound of Formula (I) has hydroxy and/or alkyl hydroxy substituents, and such compounds are reacted with an acylating group, it is possible that all or a portion of such hydroxy and/or alkylhydroxy substituents will be converted to acyloxy or acyloxy alkyl groups. Compounds of Formula (II) substituted with acyloxy, acyloxy alkyl are considered within the scope of the oil-soluble additive component (B). A salt form of compounds of Formula (II) in which Z is an acylating group, which salts result from neutralization with base (as may occur, for example, due to interaction with a metal detergent, either in an additive package or a formulated lubricant), is also considered to be within the scope of the oil-soluble additive component (B).

Preferably, the oil-soluble additive component (B) is formed by the reaction of an acylating agent with a compound of Formula I. The acylating agent is selected from the group of (i) a polybutenyl succinic acylating agent (e.g. a polybutenyl or polyisobutenyl succinic anhydride (PIBSA)), derived from a polyalkene having a number average molecular weight ($\overline{M}_n$) of from 100 to 5000, preferably from about 200 to about 3000, more preferably from about 450 to about 2500.

Accordingly, each Z in a compound of Formula II, depending on the molar ratio of acylating agent reacted with the compound of Formula I, preferably independently represents H, an acyl group, a polyacyl group, a lactone ester group or an acid ester group. More preferably, each Z independently represents H or is derivable from an acylating agent selected from the group of (i) a polybutenyl succinic acylating agent as defined herein.

Accordingly, each Y' in a compound of Formula II preferably independently represents -$OR^1$ or $Z(O(CR^2R^3)_n)_yX$-

where each Z independently represents H, an acyl group, a polyacyl group, a lactone ester group or an acid ester group. Preferably, each Z independently represents H or is derivable from an acylating agent selected from the group of (i) a polybutenyl succinic acylating agent as defined herein,

Highly preferred compounds of Formula II include those wherein each Y' is independently a moiety of formula $Z(O(CR^2R^3)_n)_yX$-, where Z, $R^2$, $R^3$, n, y and X are as defined herein, more preferably $Z(O(CR^2R^3)_2)_yO$- where y is 1 to 6 (preferably y is 1), most preferably each Y' is $ZOCH_2CH_2O$-. Preferably, each Z is identical. More preferably, each Y' group is identical.

Alternative, highly preferred compounds of Formula II include those wherein at least one Ar moiety bears at least one group Y' of the formula $-OR^1$, as defined herein, and at least one Ar moiety bears at least one group Y' of the formula $Z(O(CR^2R^3)_n)_yX$-, where Z, $R^2$, $R^3$, n, y and X are as defined herein. Preferably, 2 mol. % to about 98 mol. %, preferably from about 40 mol. % to about 60 mol. % such as from about 65 mol. % to about 75 mol. %, of the Y' units each independently represent $Z(O(CR^2R^3)_n)_yX$- as defined herein, more preferably $Z(O(CR^2R^3)_2)_yO$- where y is 1 to 6 (preferably y is 1), most preferably $ZOCH_2CH_2O$-; and, from about 98 mol. % to 2 mol. %, preferably from about 60 mol. % to 40 mol. %, such as from about 35 mol. % to about 25 mol. %, of Y' units each independently represent $-OR^1$, as defined herein, more preferably $-OCH_3$. Preferably, each Y' unit representing $Z(O(CR^2R^3)_n)_yX$- is identical. Preferably, each Y' unit representing $-OR^1$ is identical. Preferably, each Z is identical.

One preferred class of compounds of Formula (II) includes compounds of Formula (III):

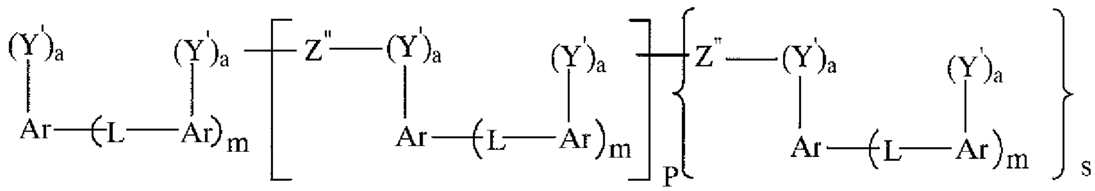

(III)

wherein one or more Y' are groups $Z(O(CR_2)_n)_yX$- in which Z is derived from lactone ester of formula IV, acid ester of formula V, or a combination thereof;

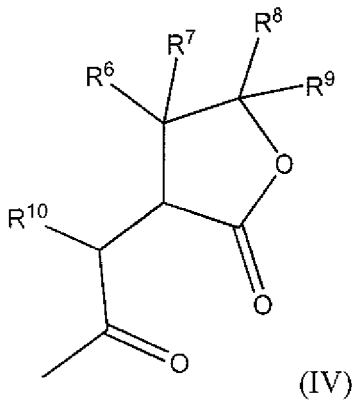

(IV)

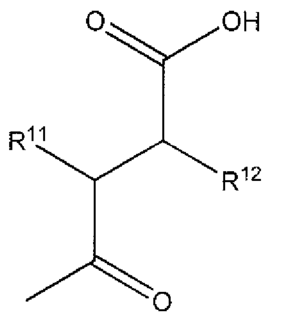

(V)

wherein $R^6$, $R^7$, $R^8$, $R^9$ $R^{10}$, $R^{11}$ and $R^{12}$ are independently selected from H, alkyl and polyalkyl and polyalkenyl containing up to 200 carbon atoms; and Z" is bisacyl of formula VI;

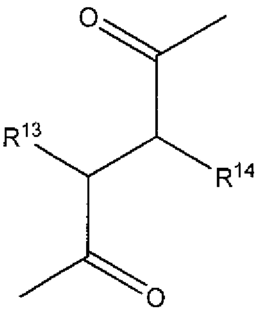

(VI)

wherein $R^{13}$ and $R^{14}$ are independently selected from H, alkyl and polyalkyl and polyalkenyl containing up to 300 carbon atoms; m is 0 to 100; and p and s are each independently about 0 to about 25, with the proviso that $p \leq m$; $s \leq m$; and $p + s \geq 1$.

Preferred compounds of Formula (III) are those wherein from about 2 mol. % to about 98 mol. % of the Y' units are $Z(O(CR^2R^3)_2)_yO$-, wherein Z is an acyl group and y is 1 to 6 (preferably y is 1), and from about 98 mol. % to 2 mol. % of Y' units are $-OR^1$, such as compounds of Formula (III) wherein Ar is naphthalene; from about 2 mol. % to about 98 mol. % of Y' units are $ZOCH_2CH_2O$-, from about 98 mol. % to 2 mol. % of Y' units are $-OCH_3$; and L is $CH_2$. Particularly preferred are compounds of Formula (III) wherein Ar is naphthalene; from about 40 mol. % to about 60 mol. % of Y' units are $ZOCH_2CH_2O$-, and from about 60 mol. % to 40 mol. % of Y' units are-$OCH_3$; m is from about 2 to about 25; p is from 1 to about 10; and s is from about 1 to about 10. Group Z is derived from a polybutenyl succinic acylating agent, which is derived from polyalkene having $\overline{M}_n$ of from 100 to 5000.

Compounds of Formula (II) can be derived from the precursors of Formula (I) by reacting the precursors of Formula (I) with the acylating agent, preferably in the presence of a liquid acid catalyst, such as sulfonic acid, e.g., dodecyl benzene sulfonic acid, paratoluene sulfonic acid or polyphosphoric acid or a solid acid catalyst such as Amberlyst-15, Amberlyst-36, zeolites, mineral acid clay or tungsten polyphosphoric acid; at a temperature of from about 0 to about 300°C, preferably from about 50 to about 250°C. Under the above conditions, the polybutenyl succinic acylating agents can form diesters, acid esters or lactone esters with the compound of Formula (I).

In one preferred embodiment, compounds of Formula (II) are the reaction product of a mixture of methylene-bridged naphthoxyethanol and 2-methoxy naphthalene compounds, and an acylating agent selected from polyalkyl succinic acylating agent and polyalkenyl succinic acylating agent, preferably derived from polybutene having $\overline{M}_n$ of from about 300 to about 5000, preferably in the presence of an acid catalyst (preferably an oil soluble liquid acid catalyst or a solid acid catalyst). Preferably, the ratio of total moles of succinic acylating moieties to total moles of naphthyl moieties is from about 1.10 to about 0.5. Preferably, the methylene-bridged naphthoxyethanol and 2-methoxy naphthalene compounds are the product of a process in which (i) a hydroxyl-naphthylene compound and ethylene carbonate are reacted in the presence of a base catalyst to form naphthoxyethanol; (ii) the base is neutralized with an excess of acid to provide an intermediate; and (iii) the intermediate is reacted with 2-methoxy naphthalene and formaldehyde in the presence of residual acid.

The oil-soluble additive component (B) is present in an amount of 0.1 to 5 mass %, of the lubricating composition based on the total mass of the lubricating oil composition.

**ENGINES**

The lubricating oil compositions of the invention may be used to lubricate mechanical engine components, particularly in internal combustion engines, e.g. spark-ignited or compression-ignited two- or four- stroke reciprocating engines, by adding the composition thereto. The engines may be conventional gasoline or diesel engines designed to be powered by gasoline or petroleum diesel, respectively; alternatively, the engines may be specifically modified to be powered by an alcohol based fuel or biodiesel fuel. Preferably, the lubricating oil compositions are crankcase lubricants. Preferably, the lubricating oil composition is for use in the lubrication of a compression-ignited internal combustion engine (diesel engine), especially a compression-ignited internal combustion engine which is fuelled at least in part with a biodiesel fuel. Such engines include passenger car diesel engines and heavy duty diesel engines, for example engines found in road trucks. More preferably, the lubricating oil composition is for use in the lubrication of a passenger car compression-ignited internal combustion engine (i.e. a light duty diesel engine), which is fuelled at least in part with a biodiesel fuel, especially such an engine which employs a late post-injection of fuel into the cylinder. More preferably, the lubricating oil composition is for use in the lubrication of the crankcase of the aforementioned engines.

When the lubricating oil composition, such as a crankcase lubricant, is used in the lubrication of a spark-ignited

or compression-ignited internal combustion engine which is fuelled at least in part with a biofuel, the lubricant during operation of the engine becomes contaminated with biofuel and decomposition products thereof. Thus according to a preferred aspect of the present invention, the lubricating oil composition of the present invention comprises at least 0.3, preferably at least 0.5, more preferably at least 1, even more preferably at least 5, even more preferably at least 10, even more preferably at least 15, even more preferably at least 20, mass % of biofuel. Although the lubricating oil composition may comprise up to 50 mass % of biofuel, preferably it includes less than 35, more preferably less than 30, mass % of biofuel.

The biofuel is biodiesel in the case of compression ignited internal combustion engines.

## BIOFUELS

Biofuel means a biodiesel fuel. Biofuels include fuels that are produced from renewable biological resources such biodiesel fuel as defined herein.

### Biodiesel Fuels

The biodiesel fuel comprises at least one alkyl ester, typically a mono-alkyl ester, of a long chain fatty acid derivable from vegetable oils or animal fats. The biodiesel fuel comprises one or more methyl or ethyl esters of such long chain fatty acids, especially one or more methyl esters.

The long chain fatty acids typically comprise long chains which include carbon, hydrogen and oxygen atoms. The long chain fatty acids include from 10 to 30, more preferably 14 to 26, most preferably 16 to 22, carbon atoms. Highly preferred fatty acids include palmitic acid, stearic acid, oleic acid and linoleic acid.

The biodiesel fuel may be derived from the esterification or transesterification of one or more vegetable oils and animal fats, such as corn oil, cashew oil, oat oil, lupine oil, kenaf oil, calendula oil, cotton oil, hemp oil, soybean oil, linseed oil, hazelnut oil, euphorbia oil, pumpkin seed oil, palm oil, rapeseed oil, olive oil, tallow oil, sunflower oil, rice oil, sesame oil or algae oil. Preferred vegetable oils include palm oil, rapeseed oil and soybean oil.

Generally, a pure biodiesel fuel that meets the ASTM D6751-08 standard (USA) or EN 14214 standard (European) specifications is designated as B100. A pure biodiesel fuel may be mixed with a petroleum diesel fuel to form a biodiesel blend which may reduce emissions and improve engine performance. Such biodiesel blends are given a designation "Bxx" where xx refers to the amount of the B100 biodiesel in volume %, based on the total volume of the biodiesel blend. For example, B10 refers to a biodiesel blend which comprises 10 volume % B100 biodiesel fuel and 90 volume % of petroleum diesel fuel. For the avoidance of doubt, the term "biodiesel fuel" includes pure biodiesel fuel (i.e. B100) and biodiesel fuel blends comprising a mixture of biodiesel fuel and petroleum diesel fuel.

Typically, the biodiesel fuel comprises a B100, B95, B90, B85, B80, B75, B70, B65, B60, B55, B50, B45, B40, B35, B30, B25, B20, B15, B10, B8, B6, B5, B4, B3, B2 or B1. Preferably, the biodiesel fuel comprises a B50 designation or lower, more preferably a B5 to B40, even more preferably B5 to B40, most preferably B5 to B20.

## CO-ADDITIVES

Preferably, the lubricating oil composition further comprises one or more co-additives in a minor amount, other than additive component (B), selected from ashless dispersants, metal detergents, corrosion inhibitors, antioxidants, pour point depressants, antiwear agents, friction modifiers, demulsifiers, antifoam agents and viscosity modifiers.

Co-additives, with representative effective amounts, that may also be present, different from additive component (B), are listed below. All the values listed are stated as mass percent active ingredient.

| Additive | Mass % (Broad) | Mass % (Preferred) |
|---|---|---|
| Ashless Dispersant | 0.1 - 20 | 1 - 8 |
| Metal Detergents | 0.1 - 15 | 0.2 - 9 |
| Friction modifier | 0 - 5 | 0 - 1.5 |
| Corrosion Inhibitor | 0 - 5 | 0 - 1.5 |
| Metal Dihydrocarbyl Dithiophosphate | 0 - 10 | 0 - 4 |
| Anti-Oxidants | 0 - 5 | 0.01 - 3 |
| Pour Point Depressant | 0.01 - 5 | 0.01 - 1.5 |
| Anti-Foaming Agent | 0 - 5 | 0.001 - 0.15 |
| Supplement Anti-Wear Agents | 0 - 5 | 0 - 2 |
| Viscosity Modifier (1) | 0 - 6 | 0.01 - 4 |

(continued)

| Additive | Mass % (Broad) | Mass % (Preferred) |
|---|---|---|
| Mineral or Synthetic Base Oil | Balance | Balance |

(1) Viscosity modifiers are used only in multi-graded oils.

The final lubricating oil composition, typically made by blending the or each additive into the base oil, may contain from 5 to 25, preferably 5 to 18, typically 7 to 15, mass % of the co-additives, the remainder being oil of lubricating viscosity.

The above mentioned co-additives are discussed in further detail as follows; as is known in the art, some additives can provide a multiplicity of effects, for example, a single additive may act as a dispersant and as an oxidation inhibitor.

A dispersant is an additive whose primary function is to hold solid and liquid contaminations in suspension, thereby passivating them and reducing engine deposits at the same time as reducing sludge depositions. For example, a dispersant maintains in suspension oil-insoluble substances that result from oxidation during use of the lubricant, thus preventing sludge flocculation and precipitation or deposition on metal parts of the engine.

Dispersants are usually "ashless", as mentioned above, being non-metallic organic materials that form substantially no ash on combustion, in contrast to metal-containing, and hence ash-forming materials. They comprise a long hydrocarbon chain with a polar head, the polarity being derived from inclusion of e.g. an O, P, or N atom. The hydrocarbon is an oleophilic group that confers oil-solubility, having, for example 40 to 500 carbon atoms. Thus, ashless dispersants may comprise an oil-soluble polymeric backbone.

A preferred class of olefin polymers is constituted by polybutenes, specifically polyisobutenes (PIB) or poly-n-butenes, such as may be prepared by polymerization of a $C_4$ refinery stream.

Dispersants include, for example, derivatives of long chain hydrocarbon-substituted carboxylic acids, examples being derivatives of high molecular weight hydrocarbyl-substituted succinic acid. A noteworthy group of dispersants is constituted by hydrocarbon-substituted succinimides, made, for example, by reacting the above acids (or derivatives) with a nitrogen-containing compound, advantageously a polyalkylene polyamine, such as a polyethylene polyamine. Particularly preferred are the reaction products of polyalkylene polyamines with alkenyl succinic anhydrides, such as described in US-A-3,202,678; -3,154,560; -3,172,892; -3,024,195; -3,024,237,-3,219,666; and -3,216,936, that may be post-treated to improve their properties, such as borated (as described in US-A-3,087,936 and -3,254,025) fluorinated and oxylated. For example, boration may be accomplished by treating an acyl nitrogen-containing dispersant with a boron compound selected from boron oxide, boron halides, boron acids and esters of boron acids.

Preferably, the lubricating oil composition includes an oil-soluble boron containing compound, especially a borated dispersant. Preferably, the borated dispersant comprises an ashless nitrogen containing borated dispersant, such as a borated polyalkenyl succinimide, especially a borated polyisobutenyl succinimide.

A detergent is an additive that reduces formation of piston deposits, for example high-temperature varnish and lacquer deposits, in engines; it normally has acid-neutralising properties and is capable of keeping finely divided solids in suspension. Most detergents are based on metal "soaps" that is metal salts of acidic organic compounds.

Detergents generally comprise a polar head with a long hydrophobic tail, the polar head comprising a metal salt of an acidic organic compound. The salts may contain a substantially stoichiometric amount of the metal when they are usually described as normal or neutral salts and would typically have a total base number or TBN (as may be measured by ASTM D2896) of from 0 to 80. Large amounts of a metal base can be included by reaction of an excess of a metal compound, such as an oxide or hydroxide, with an acidic gas such as carbon dioxide. The resulting overbased detergent comprises neutralised detergent as an outer layer of a metal base (e.g. carbonate) micelle. Such overbased detergents may have a TBN of 150 or greater, and typically of from 250 to 500 or more.

Detergents that may be used include oil-soluble neutral and overbased sulfonates, phenates, sulfurized phenates, thiophosphonates, salicylates, and naphthenates and other oil-soluble carboxylates of a metal, particularly the alkali or alkaline earth metals, e.g. sodium, potassium, lithium, calcium and magnesium. The most commonly-used metals are calcium and magnesium, which may both be present in detergents used in a lubricant, and mixtures of calcium and/or magnesium with sodium.

Particularly preferred metal detergents are neutral and overbased alkali or alkaline earth metal salicylates having a TBN of from 50 to 450, preferably a TBN of 50 to 250. Highly preferred salicylate detergents include alkaline earth metal salicylates, particularly magnesium and calcium, especially, calcium salicylates. Preferably, the alkali or alkaline earth metal salicylate detergent is the sole detergent in the lubricating oil composition.

Friction modifiers include glyceryl monoesters of higher fatty acids, for example, glyceryl mono-oleate; esters of long chain polycarboxylic acids with diols, for example, the butane diol ester of a dimerized unsaturated fatty acid; oxazoline compounds; and alkoxylated alkyl-substituted mono-amines, diamines and alkyl ether amines, for example,

ethoxylated tallow amine and ethoxylated tallow ether amine.

Other known friction modifiers comprise oil-soluble organo-molybdenum compounds. Such organo-molybdenum friction modifiers also provide antioxidant and antiwear credits to a lubricating oil composition. Suitable oil-soluble organo-molybdenum compounds have a molybdenum-sulfur core. As examples there may be mentioned dithiocarbamates, dithiophosphates, dithiophosphinates, xanthates, thioxanthates, sulfides, and mixtures thereof. Particularly preferred are molybdenum dithiocarbamates, dialkyldithiophosphates, alkyl xanthates and alkylthioxanthates. The molybdenum compound is dinuclear or trinuclear.

One class of preferred organo-molybdenum compounds useful in all aspects of the present invention is trinuclear molybdenum compounds of the formula $Mo_3S_kL_nQ_z$ and mixtures thereof wherein L are independently selected ligands having organo groups with a sufficient number of carbon atoms to render the compounds soluble or dispersible in the oil, n is from 1 to 4, k varies from 4 through to 7, Q is selected from the group of neutral electron donating compounds such as water, amines, alcohols, phosphines, and ethers, and z ranges from 0 to 5 and includes non-stoichiometric values. At least 21 total carbon atoms should be present among all the ligands' organo groups, such as at least 25, at least 30, or at least 35 carbon atoms.

The molybdenum compounds may be present in a lubricating oil composition at a concentration in the range 0.1 to 2 mass %, or providing at least 10 such as 50 to 2,000 ppm by mass of molybdenum atoms.

Preferably, the molybdenum from the molybdenum compound is present in an amount of from 10 to 1500, such as 20 to 1000, more preferably 30 to 750, ppm based on the total weight of the lubricating oil composition. For some applications, the molybdenum is present in an amount of greater than 500 ppm.

Anti-oxidants are sometimes referred to as oxidation inhibitors; they increase the resistance of the composition to oxidation and may work by combining with and modifying peroxides to render them harmless, by decomposing peroxides, or by rendering an oxidation catalyst inert. Oxidative deterioration can be evidenced by sludge in the lubricant, varnish-like deposits on the metal surfaces, and by viscosity growth.

They may be classified as radical scavengers (e.g. sterically hindered phenols, secondary aromatic amines, and organo-copper salts); hydroperoxide decomposers (e.g., organosulfur and organophosphorus additives); and multifunctionals (e.g. zinc dihydrocarbyl dithiophosphates, which may also function as anti-wear additives, and organo-molybdenum compounds, which may also function as friction modifiers and anti-wear additives).

Examples of suitable antioxidants are selected from copper-containing antioxidants, sulfur-containing antioxidants, aromatic amine-containing antioxidants, hindered phenolic antioxidants, dithiophosphates derivatives, metal thiocarbamates, and molybdenum-containing compounds. Preferred anti-oxidants are aromatic amine-containing antioxidants, molybdenum-containing compounds and mixtures thereof, particularly aromatic amine-containing antioxidants. Preferably, an antioxidant is present in the lubricating oil composition.

Anti-wear agents reduce friction and excessive wear and are usually based on compounds containing sulfur or phosphorous or both, for example that are capable of depositing polysulfide films on the surfaces involved. Noteworthy are dihydrocarbyl dithiophosphate metal salts wherein the metal may be an alkali or alkaline earth metal, or aluminium, lead, tin, molybdenum, manganese, nickel, copper, or preferably, zinc. Dihydrocarbyl dithiophosphate metal salts may be prepared in accordance with known techniques by first forming a dihydrocarbyl dithiophosphoric acid (DDPA), usually by reaction of one or more alcohols or a phenol with $P_2S_5$ and then neutralizing the formed DDPA with a metal compound. For example, a dithiophosphoric acid may be made by reacting mixtures of primary and secondary alcohols. Alternatively, multiple dithiophosphoric acids can be prepared where the hydrocarbyl groups on one are entirely secondary in character and the hydrocarbyl groups on the others are entirely primary in character. To make the metal salt, any basic or neutral metal compound could be used but the oxides, hydroxides and carbonates are most generally employed. Commercial additives frequently contain an excess of metal due to the use of an excess of the basic metal compound in the neutralization reaction.

The preferred dihydrocarbyl dithiophosphate metal salts are zinc dihydrocarbyl dithiophosphates (ZDDP) which are oil-soluble salts of dihydrocarbyl dithiophosphoric acids and may be represented by the following formula:

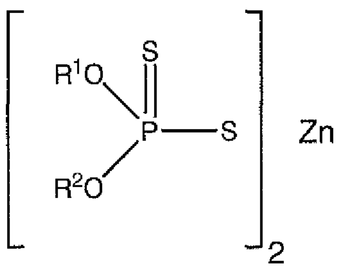

wherein $R^1$ and $R^2$ may be the same or different hydrocarbyl radicals containing from 1 to 18, preferably 2 to 12, carbon

atoms and include radicals such as alkyl, alkenyl, aryl, arylalkyl, alkaryl and cycloaliphatic radicals. Particularly preferred as $R^1$ and $R^2$ groups are alkyl groups of 2 to 8 carbon atoms, especially primary alkyl groups (i.e. $R^1$ and $R^2$ are derived from predominantly primary alcohols). Thus, the radicals may, for example, be ethyl, n-propyl, i-propyl, n-butyl, iso-butyl, sec-butyl, amyl, n-hexyl, i-hexyl, n-octyl, decyl, dodecyl, octadecyl, 2-ethylhexyl, phenyl, butylphenyl, cyclohexyl, methylcyclopentyl, propenyl, butenyl. In order to obtain oil solubility, the total number of carbon atoms (i.e. $R^1$ and $R^2$) in the dithiophosphoric acid will generally be about 5 or greater. Preferably, the zinc dihydrocarbyl dithiophosphate comprises a zinc dialkyl dithiophosphate.

Preferably, the lubricating oil composition contains an amount of dihydrocarbyl dithiophosphate metal salt that introduces 0.02 to 0.10 mass %, preferably 0.02 to 0.09 mass%, preferably 0.02 to 0.08 mass %, more preferably 0.02 to 0.06 mass % of phosphorus into the composition.

To limit the amount of phosphorus introduced into the lubricating oil composition to no more than 0.10 mass %, the dihydrocarbyl dithiophosphate metal salt should preferably be added to the lubricating oil compositions in amounts no greater than from 1.1 to 1.3 mass % (a.i.), based upon the total mass of the lubricating oil composition.

Examples of ashless anti-wear agents include 1,2,3-triazoles, benzotriazoles, sulfurised fatty acid esters, and dithiocarbamate derivatives.

<u>Rust and corrosion inhibitors</u> serve to protect surfaces against rust and/or corrosion. As rust inhibitors there may be mentioned non-ionic polyoxyalkylene polyols and esters thereof, polyoxyalkylene phenols, thiadiazoles and anionic alkyl sulfonic acids.

<u>Pour point depressants</u>, otherwise known as lube oil flow improvers, lower the minimum temperature at which the oil will flow or can be poured. Such additives are well known. Typical of these additive are $C_8$ to $C_{18}$ dialkyl fumerate/vinyl acetate copolymers and polyalkylmethacrylates.

Additives of the polysiloxane type, for example silicone oil or polydimethyl siloxane, can provide <u>foam control</u>.

A small amount of a <u>demulsifying component</u> may be used. A preferred demulsifying component is described in EP-A-330,522. It is obtained by reacting an alkylene oxide with an adduct obtained by reaction of a bis-epoxide with a polyhydric alcohol. The demulsifier should be used at a level not exceeding 0.1 mass % active ingredient. A treat rate of 0.001 to 0.05 mass % active ingredient is convenient.

<u>Viscosity modifiers</u> (or viscosity index improvers) impart high and low temperature operability to a lubricating oil. Viscosity modifiers that also function as dispersants are also known and may be prepared as described above for ashless dispersants. In general, these dispersant viscosity modifiers are functionalised polymers (e.g. interpolymers of ethylene-propylene post grafted with an active monomer such as maleic anhydride) which are then derivatised with, for example, an alcohol or amine.

The lubricant may be formulated with or without a conventional viscosity modifier and with or without a dispersant viscosity modifier. Suitable compounds for use as viscosity modifiers are generally high molecular weight hydrocarbon polymers, including polyesters. Oil-soluble viscosity modifying polymers generally have weight average molecular weights of from 10,000 to 1,000,000, preferably 20,000 to 500,000, which may be determined by gel permeation chromatography or by light scattering.

The additives may be incorporated into an oil of lubricating viscosity (also known as a base oil) in any convenient way. Thus, each additive can be added directly to the oil by dispersing or dissolving it in the oil at the desired level of concentration. Such blending may occur at ambient temperature or at an elevated temperature. Typically an additive is available as an admixture with a base oil so that the handling thereof is easier.

When a plurality of additives are employed it may be desirable, although not essential, to prepare one or more additive packages (also known as additive compositions or concentrates) comprising additives and a diluent, which can be a base oil, whereby the additives, with the exception of viscosity modifiers, multifuntional viscosity modifiers and pour point depressants, can be added simultaneously to the base oil to form the lubricating oil composition. Dissolution of the additive package(s) into the oil of lubricating viscosity may be facilitated by diluent or solvents and by mixing accompanied with mild heating, but this is not essential. The additive package(s) will typically be formulated to contain the additive(s) in proper amounts to provide the desired concentration in the final formulation when the additive package(s) is/are combined with a predetermined amount of oil of lubricating viscosity. Thus, one or more detergents may be added to small amounts of base oil or other compatible solvents (such as a carrier oil or diluent oil) together with other desirable additives to form additive packages containing from 2.5 to 90, preferably from 5 to 75, most preferably from 8 to 60, mass %, based on the mass of the additive package, of additives on an active ingredient basis in the appropriate proportions. The final formulations may typically contain 5 to 40 mass % of the additive package(s), the remainder being oil of lubricating viscosity.

## <u>EXAMPLES</u>

The invention will now be particularly described in the following examples which are not intended to limit the scope of the claims hereof.

Oxidative Stability: Hot Surface Oxidation Test

Oxidative stability is measured using the Hot Surface Oxidation Test which determines the Oxidation Induction Time (OIT) of a lubricating oil composition by Pressure Differential Scanning Calorimetry (PDSC).

A measured sample (3 mg) of a lubricating oil composition is placed in a test cell of a Pressure Differential Scanning Calorimeter (Netzsch 204 HPDSC) and the cell pressurised to 100 psi with clean dry air. The cell is then heated at a rate of 40°C per minute until the isothermal test temperature of 210°C is attained and the sample maintained at this temperature for a maximum of 240 minutes. The calorimeter provides a value of the OIT i.e. the time taken for the sample to oxidise; a larger OIT indicates the sample is more stable to oxidation than a sample having a smaller OIT.

Unless otherwise specified, all of the additives described in the Examples are available as standard additives from lubricant additive companies such as Infineum UK Ltd, Lubrizol Corporation and Afton Chemicals Corporation, for example.

Examples

A series of 5W-30 multigrade lubricating oil compositions (0.08 mass % P), as detailed in Table 1, were prepared by admixing a Group III base stock with known additives including an overbased calcium sulphonate detergent (TBN 310), an overbased calcium phenate detergent (TBN 150), a non-borated polyisobutylene derived dispersant, ZDDP, an aminic antioxidant and a viscosity modifier concentrate (Infineum SV201™). Comparative Lubricant 1 did not include an oil-soluble additive component (B) as defined herein, whereas Lubricant 1 included the oil-soluble additive component B derived from the reaction of 2-(2-naphthoxy)-alcohol, an aldehyde and an acylating agent (Infineum C9290™ available from Infineum UK Ltd - 3 mass % which represents 1.2 mass % active ingredient). The oxidation induction time for each lubricant was determined in: (a) the absence of biodiesel fuel; and, (b) in the presence of 10 % B50 biodiesel fuel. The results are also detailed in Table 1.

Table 1

| | Comparative Lubricant 1 (mass %) | Lubricant 1 (mass %) | Comparative Lubricant 1 (mass %) | Lubricant 1 (mass %) |
|---|---|---|---|---|
| Dispersant | 5.50 | 5.50 | 5.50 | 5.50 |
| Calcium sulphonate detergent (TBN 310) | 0.90 | 0.90 | 0.90 | 0.90 |
| Calcium phenate detergent (TBN 150) | 2.00 | 2.00 | 2.00 | 2.00 |
| Antioxidant | 1.00 | 1.00 | 1.00 | 1.00 |
| ZDDP | 1.0 | 1.0 | 1.0 | 1.0 |
| Viscosity modifier Concentrate (SV 201) | 5.5 | 5.5 | 5.5 | 5.5 |
| Additive component B (C9290) | - | 3.0 | - | 3.0 |
| B50 Biodiesel | 0 | 0 | 10 | 10 |
| Group III base stock | balance | balance | balance | balance |
| Oxidation Induction Time (mins) | 94.9 | 92.8 | 67.6 | 95.7 |

The results illustrate that each of the lubricants (Comparative Lubricant 1 and Lubricant 1) demonstrated comparable oxidation performance in the absence of biodiesel fuel, irrespective of whether additive component B was present in lubricating oil composition. However, in the presence of biodiesel fuel, the oxidation control is significantly greater for a lubricant that includes an oil-soluble additive component B (Lubricant 1) compared with a lubricant that did not include the oil-soluble additive component B (Comparative Lubricant 1). As expected, the oxidation control for all lubricants fell in the presence of biodiesel fuel compared to the absence of biodiesel fuel.

**Claims**

1. A lubricating oil composition comprising:

(A) an oil of lubricating viscosity in a major amount in excess of 50 mass % of the lubricating oil composition;
(B) an oil-soluble or oil-dispersible additive component (B) as an additive in a minor amount of 0.1 to 15 mass % of the lubricating oil composition, based on the total mass of the lubricating oil composition, wherein additive component (B) is obtainable by the reaction of a polybutenyl succinic acylating agent derived from a polyalkene having a number average molecular weight (Mn) of from 100 to 5000, with a compound of general Formula I: wherein:

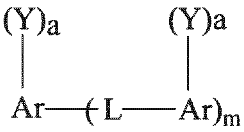 (I)

each Ar independently represents unsubstituted, except for groups Y and terminal groups, naphthalene;
each L independently represents a $C_1$ to $C_6$ alkylene linking group;
each Y independently represents $-OR^1$ or a moiety of the formula $H(O(CR^2R^3)_n)_yO-$, wherein: each $R^1$ independently represents a $C_1$ to $C_{10}$ alkyl group; each $R^2$ and $R^3$ independently represents H, or $C_1$ to $C_6$ alkyl group; n is 2 to 10; and y is 1 to 30;
each a is independently 0 to 3, with the proviso that at least one Ar moiety bears at least one group Y of the formula $H(O(CR^2R^3)_n)_yO-$; and,
m is 1 to 100; and,
wherein the lubricating oil composition is contaminated with at least 0.3 mass %, based on the total mass of the lubricating oil composition, of biodiesel fuel which is at least one alkyl ester of a $C_{10}$ to $C_{30}$ long chain fatty acid derived from vegetable oils or animal fats.

2. A lubricating oil composition as claimed in claim 1, wherein each L in a compound of Formula I represents an identical $C_1$ to $C_6$ alkylene linking group.

3. A lubricating oil composition as claimed in claim 1 or 2, wherein each L in a compound of Formula I represents a $-CH_2-$ linking group.

4. A lubricating oil composition as claimed in any one of claims 1 to 3, wherein each $R^2$ and $R^3$ in a compound of Formula I is identical.

5. A lubricating oil composition as claimed in claim 4, wherein each $R^2$ and $R^3$ in a compound of Formula I represents H.

6. A lubricating oil composition as claimed in any one of claims 1 to 5, wherein each n in the moiety of the formula $H(O(CR^2R^3)_n)_yO-$ in a compound of Formula I independently represents 2 to 5.

7. A lubricating oil composition as claimed in claim 6, wherein each n represents 2.

8. A lubricating oil composition as claimed in any one of claims 1 to 7, wherein each y in the moiety of the formula $H(O(CR^2R^3)_n)_yO-$ in a compound of Formula I independently represents 1 to 6.

9. A lubricating oil composition as claimed in claim 8, wherein each y represents 1.

10. A lubricating oil composition as claimed in any one of claims 1 to 9, wherein the moiety of the formula $H(O(CR^2R^3)_n)_yO-$ which Y may represent in a compound of Formula 1 is $HOCH_2CH_2O-$.

11. A lubricating oil composition as claimed in any one of claims 1 to 10, wherein each a in a compound of Formula I independently represents 1 to 3.

12. A lubricating oil composition as claimed in claim 11, wherein each a represents 1.

**13.** A lubricating oil composition as claimed in any one of claims 1 to 12, wherein m in a compound of Formula I is 2 to 25.

**14.** A lubricating oil composition as claimed in any one of claims 1 to 13, wherein each $R^1$ of the moiety $OR^1$, which Y may represent in a compound of Formula I, is identical.

**15.** A lubricating oil composition as claimed in claim 14, wherein each $R^1$ of the moiety $OR^1$ represents methyl.

**16.** A lubricating oil composition as claimed in any one of claims 1 to 13, wherein each Y in a compound of Formula I is independently a moiety of formula $H(O(CR^2R^3)_n)_yO$-, wherein $R^2$, $R^3$, n, and y are as defined in any one of claims 1 to 13.

**17.** A lubricating oil composition as claimed in any one of claims 1 to 15, wherein at least one Ar moiety in a compound of Formula I bears at least one group Y of the formula $-OR^1$, wherein 40 mol. % to 60 mol. % of Y groups in a compound of Formula I each independently represent $H(O(CR^2R^3)_n)_yO$- as defined in any one of claims 1 to 15 and 60 mol. % to 40 mol. % of Y groups in a compound of Formula I each independently represent $-OR^1$ as defined in any one of claims 1 to 15.

**18.** A lubricating oil composition as claimed in any one of claims 1 to 17, wherein the oil-soluble or oil-dispersible additive component B is present in an amount of 0.1 to 5 mass %, based on the total mass of the lubricating oil composition.

**19.** A method of lubricating a compression-ignited internal combustion engine which is fuelled with biodiesel fuel, as defined in any one of claims 1 to 18, comprising operating the engine with a lubricating oil composition comprising: (A) an oil of lubricating viscosity in a major amount in excess of 50 mass % of the lubricating oil composition; and, an oil-soluble or oil-dispersible additive component (B), as defined in any one of claims 1 to 18, as an additive component in a minor amount of 0.1 to 15 mass % of the lubricating oil composition, based on the total mass of the lubricating oil composition.

**20.** The use, in the lubrication of a compression-ignited internal combustion engine which is fuelled with biodiesel fuel, as defined in any one of claims 1 to 18, of an oil-soluble or oil-dispersible additive component (B), as defined in any one of claims 1 to 18, in a minor amount of 0.1 to 15 mass % of the lubricating oil composition, based on the total mass of the lubricating oil composition, in a lubricating oil composition comprising an oil of lubricating viscosity in a major amount in excess of 50 mass % of the lubricating oil composition, to reduce and/or inhibit oxidation of the lubricating oil composition, during operation of the engine, wherein the lubricating oil composition becomes contaminated with the biodiesel fuel during operation of the engine.

**Patentansprüche**

**1.** Schmierölzusammensetzung, die

(A) Öl mit Schmierviskosität in einer größeren Menge von mehr als 50 Masse-% der Schmierölzusammensetzung,
(B) öllösliche oder in Öl dispergierbare Additivkomponente (B) als Additiv in einer geringeren Menge von 0, 1 bis 15 Masse-% der Schmierölzusammensetzung, bezogen auf die Gesamtmasse der Schmierölzusammensetzung, umfasst, wobei Additivkomponente (B) durch die Reaktion von Polybutenylbernsteinsäureacylierungsmittel, das von einem Polyalken, das ein durchschnittliches Molekulargewicht (Zahlenmittel) von 100 bis 5000 aufweist, abgeleitet ist, mit einer Verbindung erhältlich ist, die durch die allgemeine Formel I wiedergegeben ist:

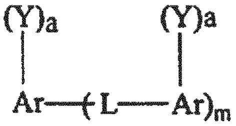 (I),

in der

jedes Ar unabhängig, mit Ausnahme von Gruppen Y und terminalen Gruppen, nicht substituiertes Naphthalin darstellt,

jedes L unabhängig eine $C_1$- bis $C_6$-Alkylenverknüpfungsgruppe darstellt,
jedes Y unabhängig $-OR^1$ oder einen Rest mit der Formel $H(O(CR^2R^3)_n)_yO$- darstellt, in der jedes $R^1$ unabhängig eine $C_1$- bis $C_{10}$-Alkylgruppe darstellt, jedes $R^2$ und $R^3$ unabhängig H oder eine $C_1$- bis $C_6$-Alkylgruppe darstellt, n 2 bis 10 ist und y 1 bis 30 ist,
jedes a unabhängig 0 bis 3 ist, mit der Maßgabe, dass mindestens ein Ar-Rest mindestens eine Gruppe Y mit der Formel $H(O(CR^2R^3)_n)_yO$- trägt und
m 1 bis 100 ist und

wobei die Schmierölzusammensetzung mit mindestens 0,3 Masse-%, bezogen auf die Gesamtmasse der Schmierölzusammensetzung, mit Biodieselkraftstoff verunreinigt ist, der mindestens ein Alkylester einer langkettigen $C_{10}$- bis $C_{30}$-Fettsäure ist, die von pflanzlichen Ölen oder tierischen Fetten abgeleitet ist.

**2.** Schmierölzusammensetzung nach Anspruch 1, wobei jedes L in einer Verbindung mit der Formel I eine identische $C_1$- bis $C_6$-Alkylenverknüpfungsgruppe darstellt.

**3.** Schmierölzusammensetzung nach Anspruch 1 oder 2, wobei jedes L in einer Verbindung mit der Formel I eine $-CH_2$-Verknüpfungsgruppe darstellt.

**4.** Schmierölzusammensetzung nach einem der Ansprüche 1 bis 3, wobei jedes $R^2$ und $R^3$ in einer Verbindung mit der Formel I identisch ist.

**5.** Schmierölzusammensetzung nach Anspruch 4, wobei jedes $R^2$ und $R^3$ in einer Verbindung mit der Formel I H darstellt.

**6.** Schmierölzusammensetzung nach einem der Ansprüche 1 bis 5, wobei jedes n im Rest mit der Formel $H(O(CR^2R^3)_n)_yO$- in einer Verbindung mit der Formel I unabhängig 2 bis 5 ist.

**7.** Schmierölzusammensetzung nach Anspruch 6, wobei jedes n 2 ist.

**8.** Schmierölzusammensetzung nach einem der Ansprüche 1 bis 7, wobei jedes y im Rest mit der Formel $H(O(CR^2R^3)_n)_yO$- in einer Verbindung mit der Formel I unabhängig 1 bis 6 ist.

**9.** Schmierölzusammensetzung nach Anspruch 8, wobei jedes y 1 ist.

**10.** Schmierölzusammensetzung nach einem der Ansprüche 1 bis 9, wobei der Rest mit der Formel $H(O(CR^2R^3)_n)_yO$-, den Y in einer Verbindung mit der Formel I darstellen kann, $HOCH_2CH_2O$-ist.

**11.** Schmierölzusammensetzung nach einem der Ansprüche 1 bis 10, wobei jedes a in einer Verbindung mit der Formel I unabhängig 1 bis 3 ist.

**12.** Schmierölzusammensetzung nach Anspruch 11, wobei jedes a 1 ist.

**13.** Schmierölzusammensetzung nach einem der Ansprüche 1 bis 12, wobei m in einer Verbindung mit der Formel I 2 bis 25 ist.

**14.** Schmierölzusammensetzung nach einem der Ansprüche 1 bis 13, wobei jedes $R^1$ des Restes $-OR^1$, den Y in einer Verbindung mit der Formel I darstellen kann, identisch ist.

**15.** Schmierölzusammensetzung nach Anspruch 14, wobei jedes $R^1$ des Restes $-OR^1$ Methyl darstellt.

**16.** Schmierölzusammensetzung nach einem der Ansprüche 1 bis 13, wobei jedes Y in einer Verbindung mit der Formel I unabhängig ein Rest mit der Formel $H(O(CR^2R^3)_n)_yO$- ist, in der $R^2$, $R^3$, n und y wie in einem der Ansprüche 1 bis 13 definiert sind.

**17.** Schmierölzusammensetzung nach einem der Ansprüche 1 bis 15, wobei mindestens ein Ar-Rest in einer Verbindung mit der Formel I mindestens eine Gruppe Y mit der Formel $-OR^1$ trägt, wobei 40 Mol-% bis 60 Mol-% der Y-Gruppen in einer Verbindung mit der Formel I jeweils unabhängig $H(O(CR^2R^3)_n)_yO$-, wie in einem der Ansprüche 1 bis 15 definiert, darstellen und 60 Mol-% bis 40 Mol-% der Y-Gruppen in einer Verbindung mit der Formel I jeweils unab-

hängig - $OR^1$, wie in einem der Ansprüche 1 bis 15 definiert, darstellen.

**18.** Schmierölzusammensetzung nach einem der Ansprüche 1 bis 17, wobei die öllösliche oder in Öl dispergierbare Additivkomponente B in einer Menge von 0,1 bis 5 Masse-%, bezogen auf die Gesamtmasse der Schmierölzusammensetzung, vorhanden ist.

**19.** Verfahren zum Schmieren eines kompressionsgezündeten Motors, der mit Biodieselkraftstoff, wie in einem der Ansprüche 1 bis 18 definiert, betrieben wird, bei dem der Motor mit Schmierölzusammensetzung betrieben wird, die A) Öl mit Schmierviskosität in einer größeren Menge von mehr als 50 Masse-% der Schmierölzusammensetzung und öllösliche oder in Öl dispergierbare Additivkomponente (B), wie in einem der Ansprüche 1 bis 18 definiert, als Additivkomponente in einer geringeren Menge von 0,1 bis 15 Masse-% der Schmierölzusammensetzung, bezogen auf die Gesamtmasse der Schmierölzusammensetzung, umfasst.

**20.** Verwendung von öllöslicher oder in Öl dispergierbarer Additivkomponente (B), wie in einem der Ansprüche 1 bis 18 definiert, in einer geringen Menge von 0,1 bis 15 Masse-% der Schmierölzusammensetzung, bezogen auf die Gesamtmasse der Schmierölzusammensetzung, in einer Schmierölzusammensetzung, die Öl mit Schmierviskosität in einer größeren Menge von mehr als 50 Masse-% der Schmierölzusammensetzung umfasst, bei der Schmierung eines kompressionsgezündeten Motors, der mit Biodieselkraftstoff, wie in einem der Ansprüche 1 bis 18 definiert, betrieben wird, um während des Betriebs des Motors die Oxidation der Schmierölzusammensetzung zu reduzieren und/oder zu hemmen, wobei die Schmierölzusammensetzung während des Betriebs des Motors mit dem Biodieselkraftstoff verunreinigt wird.

## Revendications

**1.** Composition d'huile lubrifiante comprenant :

(A) une huile de viscosité propre à la lubrification en une quantité majeure en excès de 50 % en masse de la composition d'huile lubrifiante ;
(B) un composant additif soluble dans l'huile ou dispersible dans l'huile (B) comme additif en une quantité mineure de 0,1 à 15 % en masse de la composition d'huile lubrifiante, sur la base de la masse totale de la composition d'huile lubrifiante, où le composant additif (B) peut être obtenu par la réaction d'un agent acylant polybutényle succinique dérivé d'un polyalkylène ayant un poids moléculaire moyen en nombre (Mn) de 100 à 5000, avec un composé de formule générale I :

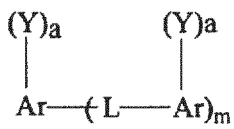

(I)

dans laquelle :

chaque Ar représente indépendamment un naphtalène non substitué, à l'exception des groupes Y et des groupes terminaux, ;
chaque L représente indépendamment un groupe de liaison alkylène en $C_1$ à $C_6$ ;
chaque Y représente indépendamment un groupe $-OR^1$ ou un groupement de formule $H(O(CR^2R^3)_n)_yO-$, où : chaque $R^1$ représente indépendamment un groupe alkyle en $C_1$ à $C_{10}$ ; chaque $R^2$ et $R^3$ représente indépendamment H ou un groupe alkyle en $C_1$ à $C_6$ ; n vaut 2 à 10 ; et y vaut 1 à 30 ;
chaque a vaut indépendamment 0 à 3, à la condition qu'au moins un groupement Ar porte au moins un groupe Y de la formule $H(O(CR^2R^3)_n)_yO-$ ; et,
m vaut 1 à 100 ; et,
où la composition d'huile lubrifiante est contaminée avec au moins 0,3 % en masse, sur la base de la masse totale de la composition d'huile lubrifiante, d'un carburant biodiesel qui est au moins un ester alkylique d'un acide gras à chaîne longue en $C_{10}$ à $C_{30}$ dérivé d'huiles végétales ou de graisses animales.

**2.** Composition d'huile lubrifiante selon la revendication 1, dans laquelle chaque L dans un composé de formule I représente un groupe de liaison alkylène en $C_1$ à $C_6$ identique.

3. Composition d'huile lubrifiante selon la revendication 1 ou 2, dans laquelle chaque L dans un composé de formule I représente un groupe de liaison $-CH_2-$.

4. Composition d'huile lubrifiante selon l'une quelconque des revendications 1 à 3, dans laquelle chaque $R^2$ et $R^3$ dans un composé de formule I est identique.

5. Composition d'huile lubrifiante selon la revendication 4, dans laquelle chaque $R^2$ et $R^3$ dans un composé de formule I représente H.

6. Composition d'huile lubrifiante selon l'une quelconque des revendications 1 à 5, dans laquelle chaque n dans le groupement de formule $H(O(CR^2R^3)_n)_y)O-$ dans un composé de formule I représente indépendamment 2 à 5.

7. Composition d'huile lubrifiante selon la revendication 6, dans laquelle n représente 2.

8. Composition d'huile lubrifiante selon l'une quelconque des revendications 1 à 7, dans laquelle chaque y dans le groupement de formule $H(O(CR^2R^3)_n)_y)O-$ dans un composé de formule I représente indépendamment 1 à 6.

9. Composition d'huile lubrifiante selon la revendication 8, dans laquelle chaque y représente 1.

10. Composition d'huile lubrifiante selon l'une quelconque des revendications 1 à 9, dans laquelle le groupement de formule $H(O(CR^2R^3)_n)_y)O-$ qu'Y peut représenter dans un composé de formule I est $HOCH_2CH_2O-$.

11. Composition d'huile lubrifiante selon l'une quelconque des revendications 1 à 10, dans laquelle chaque a dans un composé de formule I représente indépendamment 1 à 3.

12. Composition d'huile lubrifiante selon la revendication 11, dans laquelle chaque a représente 1.

13. Composition d'huile lubrifiante selon l'une quelconque des revendications 1 à 12, dans laquelle m dans un composé de formule I vaut 2 à 25.

14. Composition d'huile lubrifiante selon l'une quelconque des revendications 1 à 13, dans laquelle chaque $R^1$ du groupement $OR^1$, qu'Y peut représenter dans un composé de formule I, est identique.

15. Composition d'huile lubrifiante selon la revendication 14, dans laquelle chaque $R^1$ du groupement $OR^1$ représente un groupe méthyle.

16. Composition d'huile lubrifiante selon l'une quelconque des revendications 1 à 13, dans laquelle chaque Y dans un composé de formule I est indépendamment un groupement de formule $H(O(CR^2R^3)_n)_y)O-$, où $R^2$, $R^3$, n et y sont tels que définis dans l'une quelconque des revendications 1 à 13.

17. Composition d'huile lubrifiante selon l'une quelconque des revendications 1 à 15, dans laquelle au moins un groupement Ar dans un composé de formule I porte au moins un groupe Y de formule $-OR^1$, où 40 % en mol à 60 % en mol des groupes Y dans un composé de formule I représentent chacun indépendamment $H(O(CR^2R^3)_n)_y)O-$ tel que défini dans l'une quelconque des revendications 1 à 15 et 60 % en mol à 40 % en mol des groupes Y dans un composé de formule I représentent chacun indépendamment $-OR^1$ tel que défini dans l'une quelconque des revendications 1 à 15.

18. Composition d'huile lubrifiante selon l'une quelconque des revendications 1 à 17, dans laquelle le composant additif soluble dans l'huile ou dispersible dans l'huile B est présent en une quantité de 0,1 à 5 % en masse sur la base de la masse totale de la composition d'huile lubrifiante.

19. Procédé de lubrification d'un moteur à combustion interne à allumage par compression qui est alimenté avec du carburant biodiesel, tel que défini dans l'une quelconque des revendications 1 à 18, comprenant le fonctionnement du moteur avec une composition d'huile lubrifiante comprenant : (A) une huile de viscosité propre à la lubrification en une quantité majeure en excès de 50 % en masse de la composition d'huile lubrifiante ; et, un composant additif soluble dans l'huile ou dispersible dans l'huile (B), tel que défini dans l'une quelconque des revendications 1 à 18, comme composant additif en une quantité mineure de 0,1 à 15 % en masse de la composition d'huile lubrifiante, sur la base de la masse totale de la composition d'huile lubrifiante.

**20.** Utilisation, dans la lubrification d'un moteur à combustion interne à allumage par compression qui est alimenté avec du carburant biodiesel, tel que défini dans l'une quelconque des revendications 1 à 18, d'un composant additif soluble dans l'huile ou dispersible dans l'huile (B), tel que défini dans l'une quelconque des revendications 1 à 18, en une quantité mineure de 0, 1 à 15 % en masse de la composition d'huile lubrifiante, sur la base de la masse totale de la composition d'huile lubrifiante, dans une composition d'huile lubrifiante comprenant une huile de viscosité propre à la lubrification en excès de 50 % en masse de la composition d'huile lubrifiante, pour réduire et/ou inhiber l'oxydation de la composition d'huile lubrifiante, durant le fonctionnement du moteur, où la composition d'huile lubrifiante devient contaminée avec le carburant biodiesel durant le fonctionnement du moteur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1959003 A
- US 20060189492 A
- US 2008194438 A
- US 3202678 A
- US 3154560 A
- US 3172892 A
- US 3024195 A
- US 3024237 A
- US 3219666 A
- US 3216936 A
- US 3087936 A
- US 3254025 A
- EP 330522 A

### Non-patent literature cited in the description

- Engine Oil Licensing and Certification System. Industry Services Department. American Petroleum Institute (API) publication, December 1996